Europäisches Patentamt

European Patent Office

Office européen des brevets

(11) Publication number: **0 408 261 A1**

## (12) EUROPEAN PATENT APPLICATION

(21) Application number: 90307392.2

(22) Date of filing: 06.07.90

(51) Int. Cl.⁵: **G02B 6/12, G02B 6/28**

(30) Priority: **11.07.89 GB 8915841**

(43) Date of publication of application:
**16.01.91 Bulletin 91/03**

(84) Designated Contracting States:
**DE FR NL**

(71) Applicant: **THE GENERAL ELECTRIC
COMPANY, p.l.c.
1 Stanhope Gate
London W1A 1EH(GB)**

(72) Inventor: **Nourshargh, Noorallah
249 Goldhurst Terrace
London, NW6(GB)**
Inventor: **Shipley, Simon Paul
8 Rigley Cottages, Grecian Street
Aylesbury, Buckinghamshire(GB)**

(74) Representative: **MacKenzie, Ian Alastair
Robert
The General Electric Company, p.l.c. Central
Patent Department Wembley Office Hirst
Research Center East Lane
Wembley Middlesex HA9 7PP(GB)**

(54) Intergrated optic waveguide coupler.

(57) An integrated optic waveguide directional coupler comprising two parallel, adjacent, identical waveguides (G1,G2) whose lateral spacing is zero for an interaction length (L) of from 20 to 800 um, the waveguides diverging from both ends of the interaction length.

*Fig. 1.*

# INTEGRATED OPTIC WAVEGUIDE COUPLER

This invention relates to integrated optic waveguide couplers, i.e. those in which power in one waveguide is coupled to an adjacent waveguide. The invention is particularly useful in passive star couplers, for example 2xN or NxN star couplers, in which power from each input waveguide is distributed equally among N output waveguides. Such star couplers are useful in optical communications networks.

It is advantageous in optical communications networks which involve optical signals of two or more different wavelengths for the star couplers to be wavelength insensitive, over the range of wavelengths for which the network is designed. Wavelength insensitivity has been achieved in optical fibre couplers, but not thus far in integrated optic couplers.

Accordingly, the invention provides an integrated optic waveguide directional coupler comprising two parallel, adjacent, identical waveguides whose lateral spacing is zero for an interaction length of 20 to 800 $\mu$m, preferably 250 to 800 $\mu$m, the waveguides diverging from both ends of the interaction length. The greatest interaction length in this range corresponds to a typical coupling length for optical wavelengths in the range 1.2 to 1.6$\mu$m, the coupling length being half the beat length, i.e. half the wavelength of the oscillations of power between the waveguides. At a point one coupling length away from the input, the phase difference between the zero and first order modes is such that their sum has minimum amplitude in the region of one (the launch) waveguide and maximum amplitude in the region of the other (the coupled) waveguide. The interaction length is a fraction of the coupling length, selected to provide a predetermined power ratio between the two outputs. For a coupler which couples 50% of the input power to each output waveguide, for example, the interaction length is half the coupling length. Clearly, a series of longer interaction lengths would also provide the same power coupling ratio, but it is the shortest one which gives the minimum wavelength sensitivity. The precise optimum interaction length does however depend on the refractive indices of the waveguide and its cladding (or adjacent substrate material), on the dispersion of these materials, and on the width of the waveguides.

In another aspect, the invention provides an optical communications network operable only at optical wavelengths in the range 1.2 to 1.6 $\mu$m, comprising at least one integrated optic waveguide directional coupler with a predetermined power ratio between the two outputs, comprising two parallel, adjacent identical waveguides whose lateral spacing is zero for an interaction length equal to a predetermined fraction of one beat length of the power oscillating between the waveguides such as to provide the predetermined output power ratio, the waveguides diverging from both ends of the interaction length.

The invention will now be illustrated by the following examples of a 2x2 directional coupler and of communications networks including passive star couplers, with reference to the accompanying diagrammatic drawings, in which :

Figure 1 is a plan view of the interaction region of a 2x2 integrated optic waveguide directional coupler;

Figure 2 is a section, not drawn to scale, taken on the line A-A of Figure 1;

Figure 3 is a graph showing, for each of five different waveguide separations s, including zero in accordance with the invention, the variation of the coupling length Lc with wavelength;

Figure 4 shows a 4 x 4 coupler;

Figure 5 shows a 16 x 16 Star Coupler, and

Figure 6 shows a complete network.

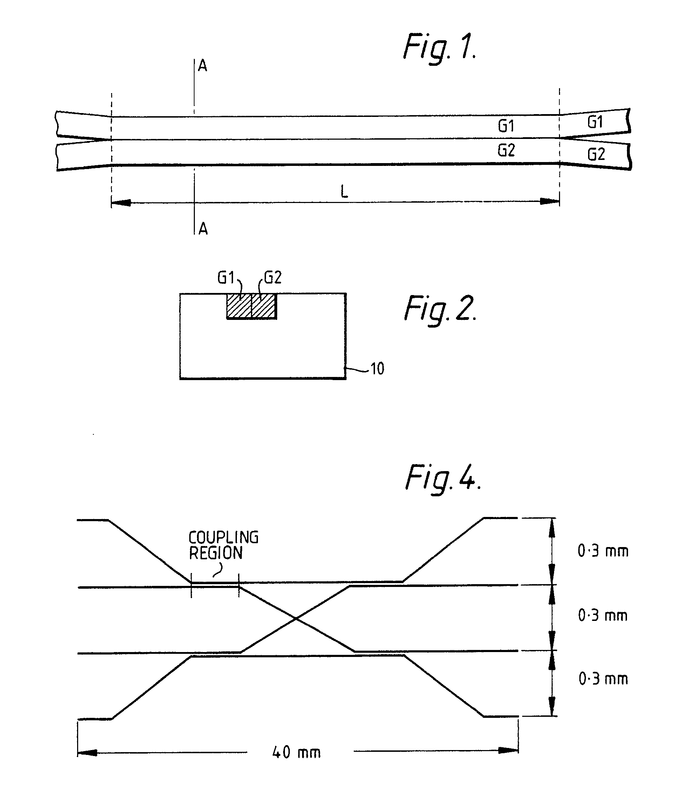

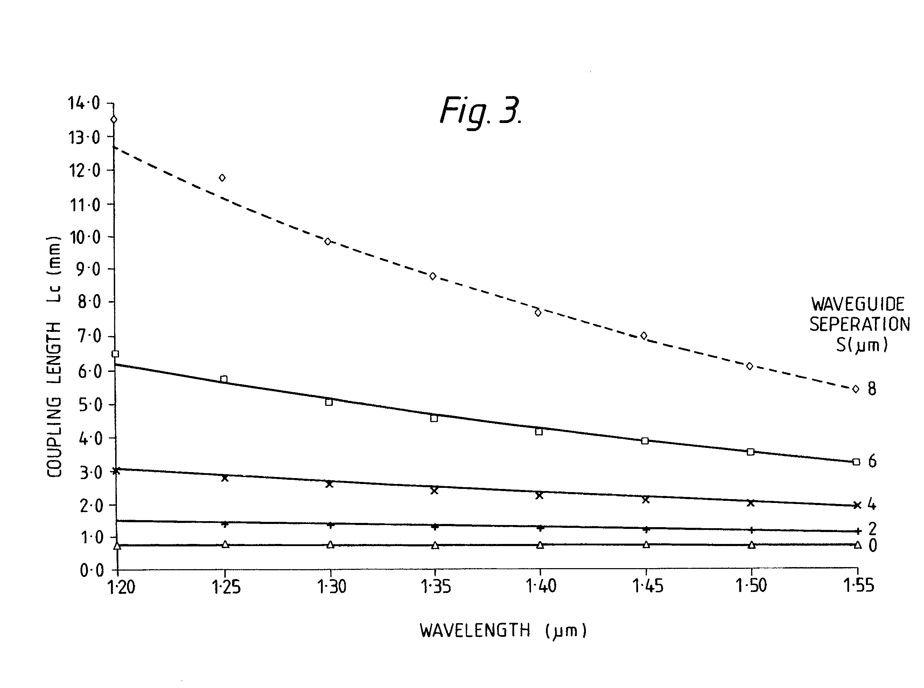

With reference to Figures 1 and 2, an integrated optic waveguide 2x2 directional coupler comprises two parallel, adjacent, identical waveguides G1 and G2. The lateral waveguide separation s is zero over an interaction length L in the range 20 to 800$\mu$m. The waveguides diverge from both ends of this length. The waveguides, in this example, have a square cross-section with dimensions 8x8$\mu$m.

In this example, the waveguides are fabricated from plasma-deposited silica and silica/germania. However, all conventional integrated optic materials are equally applicable, such as Lithium Niobate, Gallium Arsenide, Silicon Nitride and Oxynitride, ion exchange glass waveguide materials and polymer waveguide materials.

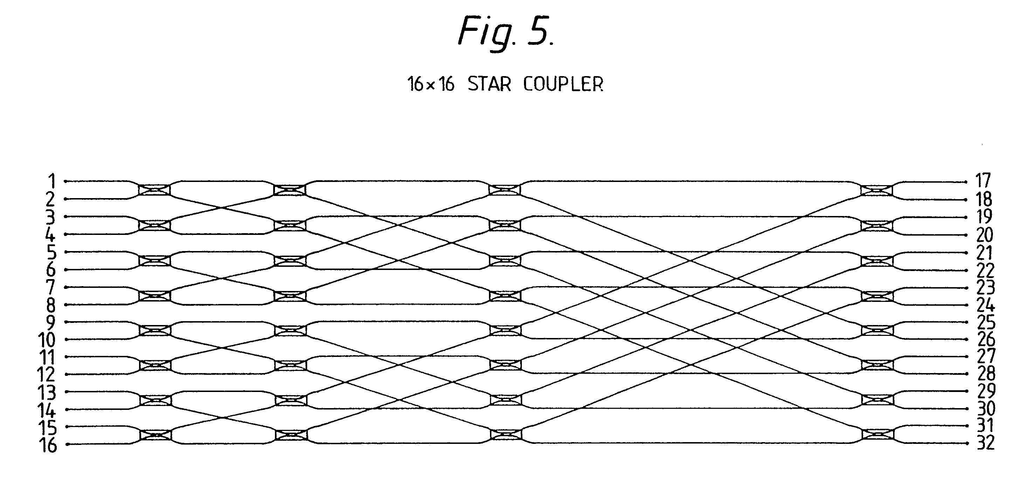

The device of Figures 1 and 2 has been tested and has been found to show coupling between the waveguides at a wavelength of 1.3 $\mu$m; couplers with zero spacing also showed a high degree of coupling at a wavelength of 0.6 $\mu$m, whereas devices with a lateral separation s of 6 $\mu$m (not shown) showed no coupling at that shorter wavelength. A part theoretical, part empirical relationship has been determined using a numerical beam propagation model, from which the graph of Figure 3 has been derived. For waveguides with a refractive index difference between the core and cladding of 0.004, and for an 8 $\mu$m square core, the minimum length Lc required to transfer power from one waveguide GI to the other G2, i.e. the coupling length, is approximately :

Lc = exp (-[0.27 s λ - 0.68 s + 0.31 λ - 0.06]) mm where s is the waveguide (core) separation in micrometres and is greater than or equal to zero, and λ is the wavelength in micrometres. As described above, in devices embodying the invention the waveguide separation s is zero.

As a measure of the wavelength sensitivity of these devices it is useful to compare the relative error in coupling length Lc resulting in its operation at a wavelength other than that for which the device is designed. The relative error is:

$$\frac{1}{Lc} \cdot \frac{dLc}{d} \equiv (0.27s + 0.31)$$

From this it can be seen that the relative error in the coupling length is minimised by taking the waveguide separation as zero, in accordance with the invention.

Referring now to Figure 4 of the drawings this shows a simple 4 by 4 coupler. Each of the regions indicated at CR is a coupling region of zero separation of the kind shown in Figure 1. Assuming that wavelengths λ1, λ2, λ3 and λ4 are input at input 1 to 4 respectively, then each of the outputs 5 .... 6 will output the combination of wavelengths λ, + λ2 + λ3 + λ4.

Figure 5 shows a 16 x 16 star coupler. Again the coupling regions are shown at CR.

The outputs 17 to 32 w 11 each output a complete combination of the wavelengths input at inputs 1 to 16.

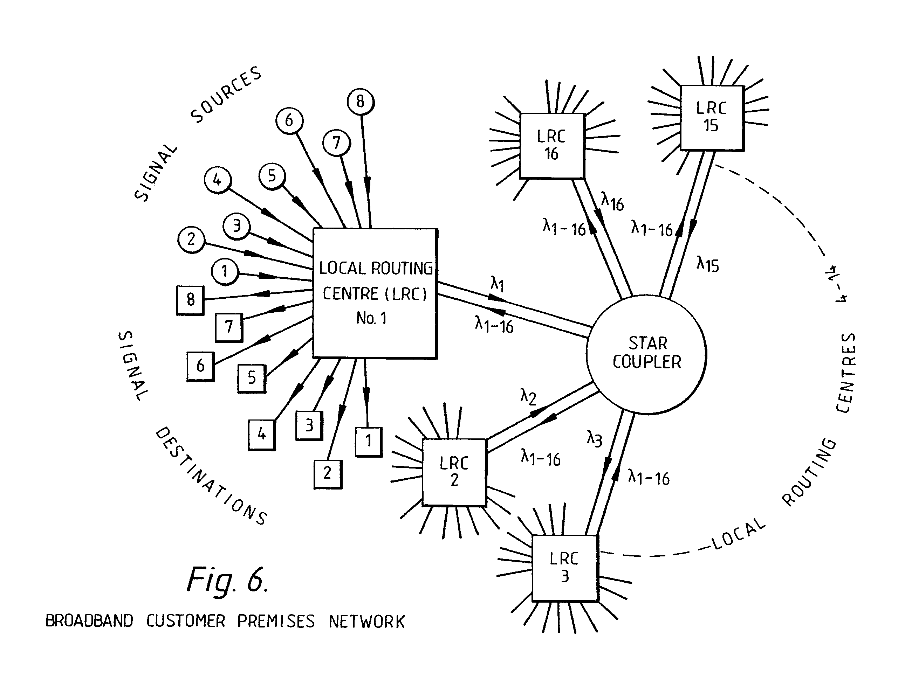

Figure 6 shows an application of the invention into a broadband communications network.

In this embodiment the network has 16 Nodes LCR 1 to LCR 16, each node being known as a Local routing centre. The Nodes are connected to a central hub 20 consisting of a 16 x 16 transmissive star coupler of the kind shown in Figure 5.

Each node is allocated a unique transmit wavelength usually in the range 1.2-1.6 um and is capable of receiving and differentiating between all N signal wavelengths (N-1 other nodes and itself). In order to simplify the system design and in particular to reduce the receiver dynamic range requirement it is necessary to minimise the variations in received power levels. This is most easily achieved if the central star coupler's performance is path and wavelength independant.

The wavelength-insensitive waveguide directional couplers in accordance with the invention are typically useful in broadband communications networks where it is desirable fully to utilise the available optical fibre bandwidth.

Two examples are the broadband passive optical network and the multichannel star network.

In a broadband passive optical network, a large number of television signals each at a different wavelength are combined into a single optical fibre in which they are carried at a wavelength within about 100 nm of 1.5 um. A second optical fibre carries two-way voice communications, i.e. telephony, at a wavelength of 1.3 um. Both sources of signals arrive at a distribution point consisting of a 2xN passive splitter embodying the invention. Light from both of two inputs is divided equally among the N outputs, so the passive splitter device must operate nominally independently of wavelength over the range 1.2-1.6μm. The signals are then carried on individual optical fibres either to a further distribution point or to a subscriber.

In a multichannel star network, each node on a network of N nodes is connected by a central hub to a receive and a transmit optical fibre. The central hub consists of an NXN transmissive star coupler embodying the invention. Each node is allocated a unique transmit wavelength, usually in the range 1.2 to 1.6 μm, and is capable of receiving and differentiating between all N signal wavelengths (those of the N-1 other nodes and itself). In order to simplify system design, and in particular to reduce the receiver dynamic range requirement, it is necessary to minimise the variations in received power levels. This is most easily achieved if the central star coupler's performance is path and wavelength independent, which is satisfied by means of the invention.

## Claims

1. An integrated optic waveguide directional coupler comprising two parallel, adjacent, identical waveguides (G1, G2) and characterised in that the lateral spacing between said waveguides is zero for an interaction length of from 20 to 800 um, the waveguides diverging from both ends of the interacting length.

2. An integrated optic device characterised in that it comprises a single substrate (10) having a plurality of interconnected waveguide directional couplers according to Claim 1 to constitute an MxN passive star coupler, where M = 2 or more.

3. An integrated optic waveguide directional coupler according to Claim 1, or an integrated optic device according to Claim 2, and further characterised in that at least one waveguide (G1, G2) is coupled to a terminal for connecting it with the end of an optical fibre.

4. An optical communications network operable only at optical wavelengths in the range 1.2 to 1.6 um, and characterised in that it comprises at least one integrated optic waveguide directional coupler w th a predetermined power ratio between the two inputs, comprising two parallel, adjacent identical waveguides (G1, G2) whose lateral spacing is zero for an interaction length equal to a predetermined fraction of one beat length of the power oscillating between the waveguides such as to provide the predetermined output power ratio, the waveguides diverging from both ends of the interaction length.

*Fig.1.*

G1 | G1
G2 | G2

L

*Fig.2.*

G1 | G2

10

*Fig.4.*

COUPLING
REGION

0·3 mm

0·3 mm

0·3 mm

40 mm

Fig. 3.

EP 0 408 261 A1

# Fig. 5.

16×16 STAR COUPLER

EP 0 408 261 A1

Fig. 6.

BROADBAND CUSTOMER PREMISES NETWORK

EP 0 408 261 A1

**EUROPEAN SEARCH REPORT**

Application Number

**EP 90 30 7392**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 152 991 (PHILLIPS PATENTVERWALTUNG) <br> * abstract; figures 1,2,6; claims 1,2 * <br> — — — | 1,2 | G 02 B 6/12 <br> G 02 B 6/28 |
| X | ELECTRONICS <br> & COMMUNICATIONS IN JAPAN vol. 70, no. 1, January 1987, pages 97-104, Silver Spring, Maryland, US; Y. KOKUBUN et al.: "Evaluation of Modal Distribution of Optical Branching Waveguide by Phase Space" <br> * page 99, figure 5 * <br> — — — | 1,3 | |
| X | IEEE JOURNAL OF QUANTUM ELECTRONICS vol. OE-22, no. 6, June 1986, pages 911-918, New York, US; R.A. FORBER et al.: "Symmetric Directional Coupler Switches" <br> * page 911, figures 1,2a,11 * <br> — — — | 1,2 | |
| A | APPLIED OPTICS vol. 28, no. 13, 1 July 1989, pages 2459,2460; S.I. NAJAFI et al.: "Potassium ion exchanged glass waveguide directional couplers at 0.6328 and 1.3 micrometers" <br> * the whole document * <br> — — — — — | 4 | |
| | | | **TECHNICAL FIELDS SEARCHED (Int. Cl.5)** <br><br> G 02 B <br> H 04 B |

The present search report has been drawn up for all claims

| Place of search | Date of completion of search | Examiner |
|---|---|---|
| Berlin | 11 October 90 | HYLLA W R |